# EUROPEAN PATENT APPLICATION

(11) **EP 4 257 572 A1**
(43) Date of publication of application: **11.10.2023**
(21) Application number: 23165594.5
(22) Date of filing: 30.03.2023
(51) Int. Cl.: C04B 35/14, C04B 35/16, C04B 35/565, C04B 35/571, C04B 35/573, C04B 35/634, C04B 35/80, C04B 41/80, C04B 41/85, C04B 41/91, C04B 41/52, C04B 41/89

(54) **CERAMIC MATRIX COMPOSITE COMPONENT AND METHOD OF MAKING THE SAME**

(30) Priority: 01.04.2022 US 202217711614
(71) Applicant: Raytheon Technologies Corporation, Farmington, CT 06032 (US)
(72) Inventor: JACKSON III, Richard Wesley, 06355, Mystic (US); TANG, Xia, West Hartford, 06107 (US); BEALS, James T., West Hartford, 06107 (US)
(74) Representative: Dehns

(57) **Abstract**

A method of making a ceramic matrix composite according to an exemplary embodiment of this disclosure, among other possible things includes forming a ceramic matrix composite component (100) by infiltrating an array (102) of ceramic-based fibers (104) with a ceramic-based matrix (106). The array (102) of ceramic-based fibers (104) forms a surface (108) that includes gaps (110) between adjacent ones of the fibers (104). The method also includes applying a paste including filler particles (114) and filler matrix (116) in a carrier fluid to the surface (108) of the ceramic-based fibers (104) that includes the gaps (110) such that the paste fills the gaps (110) and removing the carrier fluid to leave behind a filler (112) including the filler particles (114) and the filler matrix (116) in the gaps (110). A ceramic matrix composite component (100) is also disclosed.

## Description

### BACKGROUND

A gas turbine engine typically includes a fan section, a compressor section, a combustor section and a turbine section. Air entering the compressor section is compressed and delivered into the combustion section where it is mixed with fuel and ignited to generate a high-speed exhaust gas flow. The high-speed exhaust gas flow expands through the turbine section to drive the compressor and the fan section. The compressor section may include low and high pressure compressors, and the turbine section may also include low and high pressure turbines.

Ceramic matrix composites ("CMC") are being considered for certain gas turbine engine components, and have usefulness in other fields as well. For instance, CMCs can be employed for airfoils in the compressor or turbine sections of a gas turbine engine. Among other attractive properties, CMCs have high temperature resistance. Despite this attribute, however, there are unique challenges to implementing CMCs in airfoils.

### SUMMARY

A method of making a ceramic matrix composite according to an exemplary embodiment of this disclosure, among other possible things includes forming a ceramic matrix composite component by infiltrating an array of ceramic-based fibers with a ceramic-based matrix. The array of ceramic-based fibers has a surface that includes gaps between adjacent ones of the fibers. The method also includes applying a paste including filler particles and filler matrix in a carrier fluid to the surface of the ceramic-based fibers that includes the gaps such that the paste fills the gaps, and removing the carrier fluid to leave behind a filler including the filler particles and the filler matrix in the gaps.

In a further example of the foregoing, the method includes the step of abrading an outer surface of the paste to remove at least a portion of the paste after the removing step.

In a further example of any of the foregoing, the method includes the step of applying an environmental barrier coating to an outer surface of the filler.

In a further example of any of the foregoing, the method also includes the step of sintering the ceramic matrix composite component after the step of applying the environmental barrier coating to simultaneously sinter the filler and the environmental barrier coating.

In a further example of any of the foregoing, the gaps have an average length L and the environmental barrier coating has a thickness T, and length L is at least about 50% of the size of the thickness T.

In a further example of any of the foregoing, the fibers are woven to form the array.

In a further example of any of the foregoing, the fibers include a first set of fibers oriented in a first direction and a second set of fibers oriented in a second direction different from the first direction and woven with the first set of fibers.

In a further example of any of the foregoing, the fibers are arranged in fiber tows.

In a further example of any of the foregoing, the filler matrix includes at least ones of one of silicon carbide, hafnium silicate and colloidal silica.

In a further example of any of the foregoing, the filler particles include gettering particles.

In a further example of any of the foregoing, the filler further includes submicron packing particles.

In a further example of any of the foregoing, wherein the filler particles have an average diameter between about 20 and about 40 microns.

A ceramic matrix composite component according to an exemplary embodiment of this disclosure, among other possible things includes an array of ceramic-based fibers disposed in a ceramic-based matrix, and gaps between adjacent ones of fibers at a surface of the fiber array, and a filler disposed on the surface of the fiber array and in the gaps, the filler including gettering particles in a filler matrix.

In a further example of the foregoing, the ceramic matrix composite component also includes an environmental barrier coating disposed on an outer surface of the filler.

In a further example of any of the foregoing, the gaps have an average length L and the environmental barrier coating has a thickness T, and length L is at least about 50% of the size of the thickness T.

In a further example of any of the foregoing, the filler matrix includes at least one of silicon carbide, hafnium silicate and colloidal silica.

In a further example of any of the foregoing, the gettering particles have an average diameter between about 20 and about 40 microns.

In a further example of any of the foregoing, wherein the filler further includes submicron packing particles.

In a further example of any of the foregoing, the submicron packing particles are inert.

In a further example of any of the foregoing, the filler includes glass additives.

### BRIEF DESCRIPTION OF THE DRAWINGS

Figure 1 is a schematic view of an example gas turbine engine.
Figure 2 shows a detail view of a ceramic matrix composite component.
Figure 3 schematically shows a detail view of woven fibers for a ceramic matrix composite component.
Figure 4 shows a detail view of the ceramic matrix composite component of Figure 2 with a filler.
Figure 5 shows a detail view of a portion of the filler of Figure 4.
Figure 6 shows a method of making the ceramic matrix composite of Figures 4-5.

### DETAILED DESCRIPTION

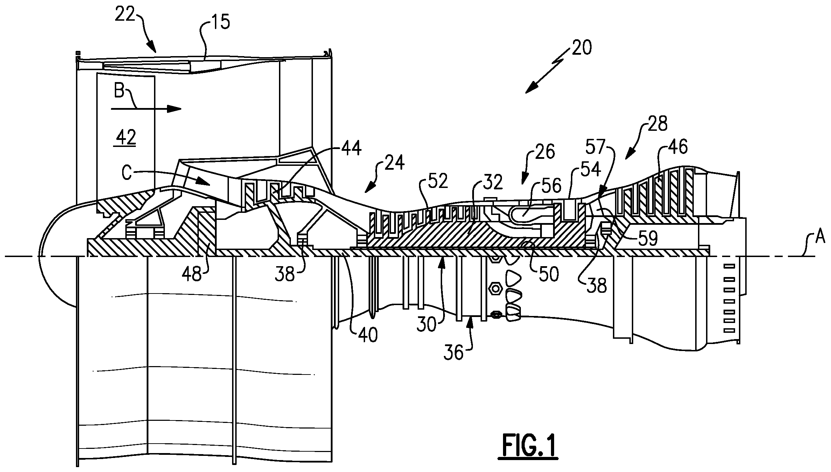

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 drives air along a bypass flow path B in a bypass duct defined within a housing 15 such as a fan case or nacelle, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive a fan 42 at a lower speed than the low speed spool 30. The high speed spool 32 includes an outer shaft 50 that interconnects a second (or high) pressure compressor 52 and a second (or high) pressure turbine 54. A combustor 56 is arranged in the exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded through the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), and can be less than or equal to about 18.0, or more narrowly can be less than or equal to 16.0. The geared architecture 48 is an epicyclic gear train, such as a planetary gear system or other gear system, with a gear reduction ratio of greater than about 2.3. The gear reduction ratio may be less than or equal to 4.0. The low pressure turbine 46 has a pressure ratio that is greater than about five. The low pressure turbine pressure ratio can be less than or equal to 13.0, or more narrowly less than or equal to 12.0. In one disclosed embodiment, the engine 20 bypass ratio is greater than about ten (10:1), the fan diameter is significantly larger than that of the low pressure compressor 44, and the low pressure turbine 46 has a pressure ratio that is greater than about five (5:1). Low pressure turbine 46 pressure ratio is pressure measured prior to an inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1 and less than about 5:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. The engine parameters described above and those in this paragraph are measured at this condition unless otherwise specified. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45, or more narrowly greater than or equal to 1.25. "Low corrected fan tip speed" is the actual fan tip speed in ft/sec divided by an industry standard temperature correction of [(Tram °R) / (518.7 °R)]^{0.5} (where °R = K x 9/5). The "Low corrected fan tip speed" as disclosed herein according to one non-limiting embodiment is less than about 1150.0 ft / second (350.5 meters/second), and can be greater than or equal to 1000.0 ft / second (304.8 meters/second).

Some of the components of the gas turbine engine 20, such as airfoils in the turbine section 28, can be made of ceramic matrix composite (CMC) materials. In general, CMC components include ceramic-based reinforcements, such as fibers, in a ceramic-based matrix. CMC components optionally include coatings that can provide mechanical, thermal, and/or environmental protection to the underlying CMC material.

In the example where the reinforcements are fibers, the fibers can be arranged in a variety of ways that are known in the art, such as unidirectionally, in various weaves including three-dimensional weaves, braids, etc. In some more particular examples, the fibers can be arranged in bundles or tows. However, it should be understood that other non-fiber reinforcements such as grains or particles are also contemplated.

Moreover, the CMC components can include several plies or layers of CMC material stacked and bonded to one another to form a three-dimensional component.

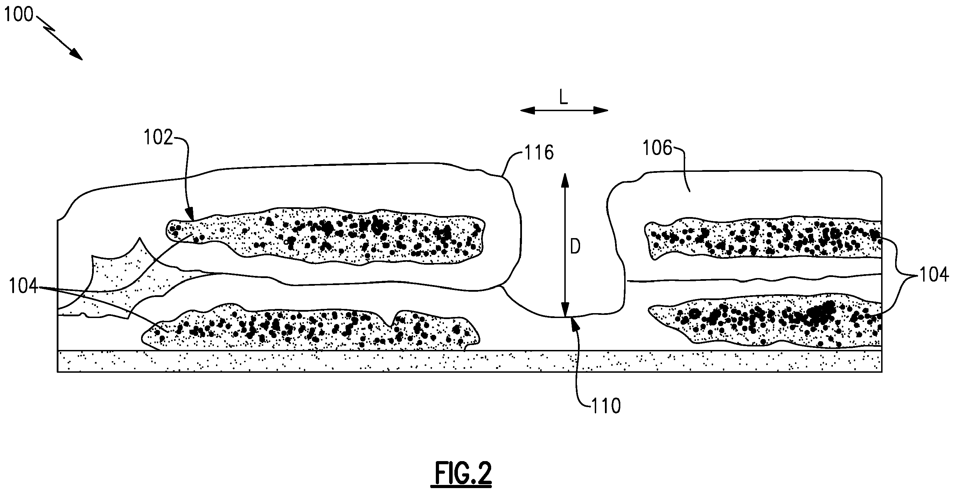

Figure 2 schematically illustrates a representative portion of an example CMC component 100. The CMC component 100 includes an array 102 of ceramic-based reinforcements 104. In this example, the ceramic-based reinforcements 104 are fibers arranged in bundles or tows. The fiber array 102 is infiltrated with a ceramic-based matrix 106.

In some examples, the fiber array 102 includes woven fibers or fiber tows. In general, a more open weave pattern (e.g., the more spaced apart the fibers) allows for improved matrix infiltration and a more densified CMC component 100, which in turn improves the mechanical durability of the CMC component 100. However, implementing CMC components 100 with open weave patterns poses certain challenges, such as increased surface roughness due to the larger spaces between adjacent fibers at the surface of the CMC component 100.

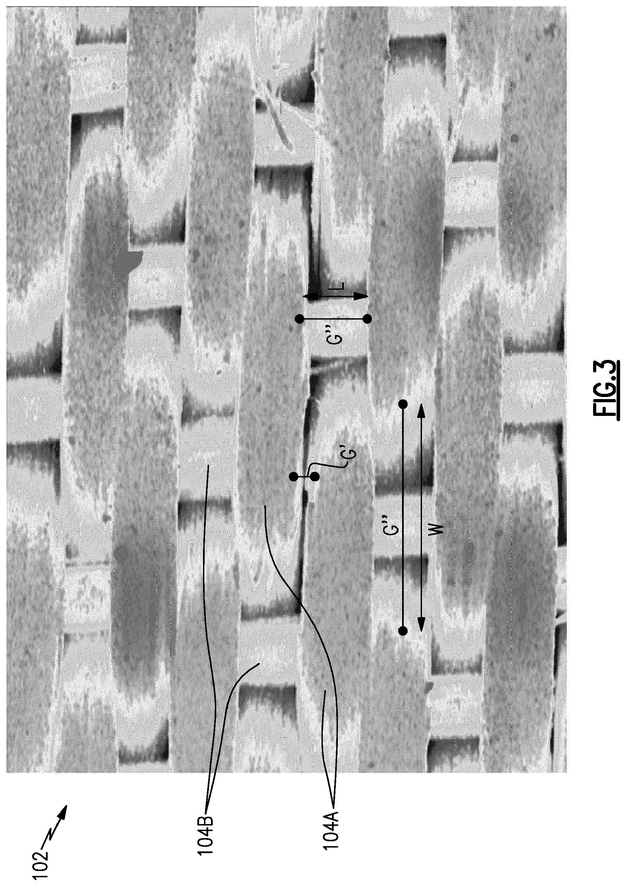

Figure 3 shows a detail top-down view of an example fiber array 102 for the CMC component 100. In this example, the fiber array 102 includes a first set of fibers 104A and a second set of fibers 104B that are woven together. Though the sets of fibers 104A/104B in this example are oriented perpendicular to one another, it should be understood that other weaves, other nonwoven fiber configurations, or non-fiber reinforcements are also contemplated for the CMC component 100. Additionally, in Figure 3, the first and second sets of fibers 104A/104B comprise individual fibers. In other examples, the first and second sets of fibers 104A/104B can comprise bundles or tows of fibers in place of the individual fibers.

In the particular weave pattern of Figure 3, the first set of fibers 104A are arranged generally in a horizontal direction and each have an extent that lays on top of the second set of fibers 104B, which are arranged generally in a vertical direction. The first set of fibers 104A is therefore nearest a surface 108 of the CMC component 100 (Figure 2) in the example of Figure 3. As shown therein, there are various gaps G at the surface 108 between adjacent ones of the fibers 104A. Some gaps G' are due to spacing between adjacent ones of the first set of fibers 104A. Other gaps G" are the result of spaces formed due to the weave pattern of the first set of fibers 104A with the second set of fibers 104B. In a particular example, the gaps G" have a length L and width W, show in in Figure 3, each of which are between about 250 and 1000 microns.

Though in this example only certain of the first set of fibers 104A are shown, it should be understood that in other examples the surface 108 of the CMC component 100 could also or alternatively include fibers of the second set of fibers 104B, depending on the weave pattern or other arrangement of fibers 104A/104B. The surface 108 of the CMC component 100 includes gaps 110 between adjacent ones of the fibers 104A/104B which could be either of the gaps G' and G" discussed above. In one example, the gaps 110 have a depth D, show in Figure 2, of between about 100 and 500 microns.

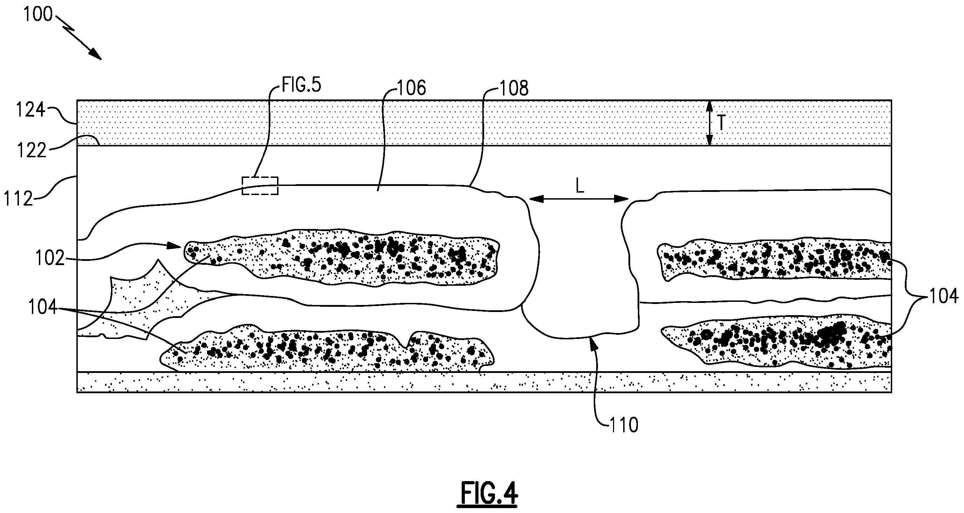

The gaps 110 cause the surface 108 of the CMC component 100 to have a rough or bumpy surface, which can be a debit to aerodynamic performance of the CMC component 100. The roughness can also cause coatings applied to the CMC component 100, such as environmental barrier coatings, to also exhibit surface roughness that mimics the surface roughness of the CMC component 100, which can introduce imperfections into the coating and debit its performance. Accordingly, reducing the surface 108 roughness improves the aerothermal, aerodynamic, and durability performance of the CMC component 100. To that end, as shown in Figure 4, a filler 112 is disposed on the surface 108 of the CMC component 100 such that the filler 112 at least partially fills in the gaps 110 to smooth the surface 108. The filler 112 decreases the surface 108 roughness of the CMC component 100, enabling the use of fiber arrays 102 with more open weave patterns and the associated benefits discussed above. In one example, the filler 112 fills more than about 50 % of the volume of the gaps 110. In a further example, the filler 112 fills more than about 75% of the volume of the gaps 110.

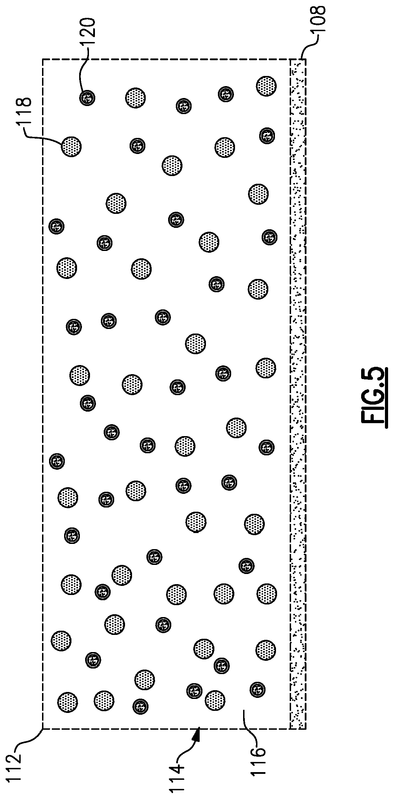

With further reference to Figure 5, the filler 112 includes filler particles 114 disposed in a filler matrix 116. In one example, the filler particles 114 have an average size (diameter) between about 10 and about 40 microns. In a further example, the filler particles 114 have an average particle size of between about 20 to about 40 microns. In one example, the filler particles 114 have a diameter that is less than about 100 microns with mean particle size of about 25 microns. In some particular examples, the filler particles 114 comprise about 25 to about 50% by volume of the filler 112.

As used herein, the term "about" has the typical meaning in the art, however in a particular example "about" can mean deviations of up to 10% of the values described herein.

In one example, the filler particles 114 include gettering particles 118. In addition to acting as part of the filler 112 to smooth the surface 108 roughness, the gettering particles 118 function as an oxygen and steam diffusion barrier to limit the exposure of the surface 108 to oxygen and/or steam from the outside environment. The gettering particles 118 are reactive with respect to oxidants and/or water and mitigate oxidants and/or water from diffusing through the barrier layer. In this way, the gettering particles 118 could reduce the likelihood of those oxidant particles/water from reaching and oxidizing the surface 108, thereby having a protective effect for the CMC component 100 with respect to environmental attack. The gettering particles 118 can include a mixture of one or more types of particles.

In one example, the filler 112 also includes submicron packing particles 120. The submicron packing particles 120 have an average size (diameter) that is less than about one micron, and is significantly lower (e.g., two orders of magnitude or more) than the average size (diameter) of the filler particles 114. In a particular example, at least 80% of the submicron particles 120 have particle diameter less than about one micron. The submicron packing particles 120, due to their small size, improve the packing of the filler 112 into the depth of the gaps 110. In some examples, the submicron packing particles 120 are inert with respect to other components of the filler 112 and the CMC component 100, and generally are not reactive with oxidants like the gettering particles 118 discussed above. For instance, the submicron packing particles 120 can include hafnium silicate (HfO₆Si₂), colloidal silica (Ludox), and/or silicon carbide (SiC). In one particular example, the submicron packing particles 120 comprise about 10 to about 30% by volume of the filler 112. In another particular example, the submicron packing particles 120 comprise about 20 to about 25% by volume of the filler 112.

The filler matrix 116 can include, for example, silicon carbide (SiC), hafnium silicate (HfSiO₄), and/or colloidal silica (Ludox). The filler matrix 116 can be the same material as the matrix 106 of the CMC component 100 in some examples.

The filler 112 can also include low melting point glass additives such as barium magnesium alumino-silicate (BMAS), yttrium oxide (Y₂O₃), calcium oxide (CaO), magnesium oxide (MgO), and aluminum oxide (Al₂O₃) which act as sintering aids, and/or increase the mechanical integrity of the filler 112 and/or improve the adhesion of the filler 112 to the CMC component 100 and the environmental barrier coating 124 (discussed below).

In one example, the filler 112 and the CMC component 100 have similar coefficients of thermal expansion (CTE), e.g. the CTE of the filler 112 and the CMC component 100 differ by less than about 25%. In general, CTE refers to the rate at which a material expands with an increase in temperature and contracts with a decrease in temperature. A significant CTE mismatch between two materials could result in delamination.

As discussed above, by filling in the gaps 110 at the surface 108, the filler 112 provides an outer surface 122 having a roughness that is less rough than the surface roughness of the surface 108.

An environmental barrier coating (EBC) 124, which is known in the art, may be disposed on the surface 122 to improve the durability of the CMC component 100 with respect to environmental attack. In some particular examples, the EBC 124 may have some common elements with the filler 112. For instance, the EBC 124 may include gettering particles that are the same or different as the gettering particles 118. The EBC may also include glass additives that are the same or different as the glass additives in the filler 112. The EBC may also include matrix materials that are the same or different as the materials of the filler matrix 116 and/or the submicron packing particles 120.

In one example, the gaps 110 have an average length L and the EBC 124 has a thickness T, and the length L is at least about 50% of the thickness T.

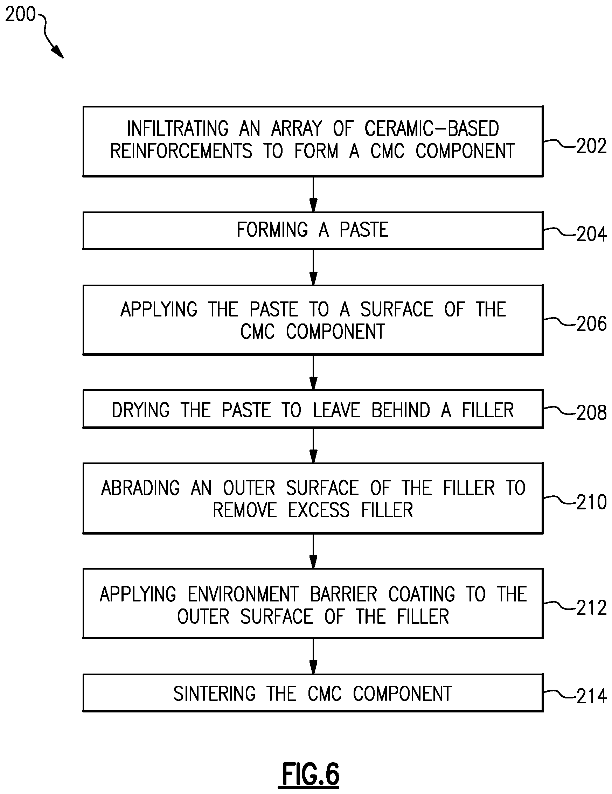

Figure 6 shows an example method 200 for making the CMC component 100. In step 202, a CMC component 100 having an array 102 of ceramic-based reinforcements 104, such as fibers 104A/104B, disposed in a ceramic-based matrix 106 is formed by any known method. For instance, the fibers 104A/104B are arranged in the array 102 in a desired configuration, and the fiber array 102 is infiltrated with the ceramic-based matrix 106. The ceramic-based matrix 106 infiltration can be accomplished by any known method such as chemical vapor deposition (CVD), chemical vapor infiltration (CVI), polymer infiltration pyrolysis (PIP), or melt infiltration (MI).

As discussed above, the fiber array 102 has the surface 108 that includes fibers 104A/104B with gaps 110 between adjacent one of the fibers 104A/104B.

In step 204, a paste is formed. The paste includes ceramic components and/or preceramic components selected to be transformed into ceramic components by any known method. In particular, the paste includes the filler particles 114 and the filler matrix 116 material in a liquid carrier to form a thick paste for the applying step 204. The filler particles 114 can include gettering particles 118 and/or submicron packing particles 120 as shown in Figure 5 and discussed above. In some examples, the solids load of the paste is greater than about 60% by volume.

The paste may also include the glass additives discussed above.

The paste may also include organic additives such as polyvinyl alcohol (PVA), polyethylene glycol (PEG), and acrylic copolymer. These additives act as binders to retain the paste on the CMC component 100 and in the gaps 110, and thereby increase the handleability of the CMC component 100 after application of the paste and to aid in subsequent abrasion steps, discussed below.

In one example, step 204 includes milling the constituents of the paste. For instance, the milling can be by ball milling with a dispersion agent. The milling serves to increase the homogeneity of the paste. After milling, the dispersion agent is removed and the paste is degassed. The removal and degassing can be done in a vacuum while the paste is constantly stirred.

Step 204 may also include an intermediate evaporation step to evaporate off some of the liquid carrier, increasing the solids load and viscosity of the paste.

In step 206, the paste is applied to the surface 108 and fills the gaps 110 as shown in Figure 4 discussed above. The paste can be dragged across the surface 108 and pushed into the gaps 110 to encourage filling of the gaps 110. The applying step 206 can be accomplished mechanically with elastomeric-like tools, in one example.

In step 208, the paste is dried to remove substantially all of the carrier liquid, leaving behind the filler particles 114 and filler matrix 116 which form the filler 112.

In optional step 210, an outer surface 122 of the filler 112 is abraded to remove excess filler 112, such that a majority of the filler 112 is in the gaps 110 and only a thin layer of filler 112 is at the surface 108. The abrading step 210 can be accomplished using standard grit paper. As discussed above, the paste which becomes the filler 112 after drying may include additives that improve the adhesion of the filler 112 to the CMC component 100. With the improved adhesion, small amounts of filler 112 can be abraded away without disturbing the filler 112 in the gaps 110.

After the drying step 208, the CMC component 100 can be subjected to an optional curing step to further set the filler 112. In one example where the filler matrix 116 includes colloidal silica (Ludox), the CMC component 100 is cured in an oven at about 200 degrees C after step 210. In this example, the curing step allows the filler matrix 116 to crosslink and become insoluble in water.

In one example where the filler 112 includes additives, the additives can be removed via thermal decomposition, for instance, during the optional curing step discussed above, prior to the application of the EBC in step 212. The additives may otherwise interfere with the application or performance of the EBC 124.

In step 212, the EBC 124 is applied to the outer surface 122 of the filler 112. The EBC 124 can be applied according to any known method. Because the filler 112 fills the gaps 110, the EBC 124 is applied to the smoother surface 122 of the filler 112 and therefore itself is applied in a relatively smooth layer with reduced propensity for forming imperfections.

In one example where the filler matrix 116 is colloidal silica (Ludox), the EBC 124 can be applied in a water-based form. As discussed above for step 210, cured colloidal silica is insoluble in water. Accordingly, the EBC 124 constituents would not infiltrate or mix with the filler 112.

In step 214, the CMC component 100 is sintered according to known sintering methods that are appropriate for sintering the EBC 124. During the sintering step 214, the filler 112 and the EBC 124 are sintered simultaneously. In the case where the filler 112 includes glass additives that act as sintering aids as discussed above, the sintering step 214 serves to sinter the submicron packing particles 120. The sintering step 214 also can cure silica-based filler matrix 116. In some particular examples, the sintering step 214 is accomplished in an oven at about 1500 degrees C for about an hour. Sintering the filler 112 and the EBC 124 simultaneously reduces processing steps and costs.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

The preceding description is exemplary rather than limiting in nature. Variations and modifications to the disclosed examples may become apparent to those skilled in the art that do not necessarily depart from this disclosure. The scope of legal protection given to this disclosure can only be determined by studying the following claims.

## Claims

1. A method of making a ceramic matrix composite, comprising:
forming a ceramic matrix composite component (100) by infiltrating an array (102) of ceramic-based fibers (104A, 104B) with a ceramic-based matrix (106), wherein the array (102) of ceramic-based fibers (104A, 104B) has a surface (108) that includes gaps (110) between adjacent ones of the fibers (104A, 104B);
applying a paste including filler particles (114) and filler matrix (116) in a carrier fluid to the surface (108) of the ceramic-based fibers (104A, 104B) that includes the gaps (110) such that the paste fills the gaps (110); and
removing the carrier fluid to leave behind a filler (112) including the filler particles (114) and the filler matrix (116) in the gaps (110).

2. The method of claim 1, further comprising the step of abrading an outer surface of the paste to remove at least a portion of the paste after the removing step.

3. The method of claim 1 or 2, further comprising the step of applying an environmental barrier coating (124) to an outer surface (122) of the filler (112).

4. The method of claim 3, further comprising the step of sintering the ceramic matrix composite component (100) after the step of applying the environmental barrier coating (124) to simultaneously sinter the filler (112) and the environmental barrier coating (124).

5. The method of claim 3 or 4, wherein the gaps (110) have an average length (L) and the environmental barrier coating (124) has a thickness (T), and the length (L) is at least about 50% of the size of the thickness (T).

6. The method of any preceding claim, wherein the fibers (104A, 104B) are woven to form the array (102), and, optionally, the fibers (104A, 104B) include a first set of fibers (104A) oriented in a first direction and a second set of fibers (104B) oriented in a second direction different from the first direction and woven with the first set of fibers (104A).

7. The method of any preceding claim, wherein the fibers (104A, 104B) are arranged in fiber tows.

8. The method of any preceding claim, wherein:
the filler particles (114) include gettering particles (118); and/or
the filler particles (114) have an average diameter between about 20 and about 40 microns.

9. A ceramic matrix composite component (100), comprising:
an array (102) of ceramic-based fibers (104A, 104B) disposed in a ceramic-based matrix (106), and gaps (110) between adjacent ones of fibers (104A, 104B) at a surface (108) of the fiber array (102); and
a filler (112) disposed on the surface (108) of the fiber array (102) and in the gaps (110), the filler (112) including gettering particles (118) in a filler matrix (116).

10. The ceramic matrix composite component (100) of claim 9, further comprising an environmental barrier coating (124) disposed on an outer surface (122) of the filler (112).

11. The ceramic matrix composite component (100) of claim 10, wherein the gaps (110) have an average length (L) and the environmental barrier coating (124) has a thickness (T), and the length (L) is at least about 50% of the size of the thickness (T).

12. The ceramic matrix composite component (100) of claim 9, 10 or 11, wherein the gettering particles (118) have an average diameter between about 20 and about 40 microns.

13. The ceramic matrix composite component (100) of any of claims 9 to 12, wherein the filler (112) includes glass additives.

14. The method or ceramic matrix composite component (100) of any preceding claim, wherein the filler matrix (116) includes at least one of silicon carbide, hafnium silicate and colloidal silica.

15. The method or ceramic matrix composite component (100) of any preceding claim, wherein the filler (112) further includes submicron packing particles (120), and, optionally, the submicron packing particles (120) are inert.
